(19) Europäisches Patentamt

European Patent Office

Office européen des brevets

(11) **EP 1 076 408 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
*H02P 1/18* (2006.01)   *H02P 6/20* (2006.01)

(21) Anmeldenummer: **00115438.4**

(22) Anmeldetag: **18.07.2000**

(54) **Verfahren zum Anlaufen von bürstenlosen Gleichstrommotoren**

Method for starting a brushless DC-motor

Procédé de démarrage d'un moteur à courant continu sans balais

(84) Benannte Vertragsstaaten:
**DE FR GB IT**

(30) Priorität: **09.08.1999   DE 19936755**

(43) Veröffentlichungstag der Anmeldung:
**14.02.2001   Patentblatt 2001/07**

(73) Patentinhaber: **WILO AG**
**44263 Dortmund (DE)**

(72) Erfinder:
• **Stephan, Waldemar**
**44319 Dortmund (DE)**
• **Katzer, Steffen**
**45549 Sprockhövel (DE)**

(74) Vertreter: **COHAUSZ DAWIDOWICZ**
**HANNIG & SOZIEN**
**Schumannstrasse 97-99**
**40237 Düsseldorf (DE)**

(56) Entgegenhaltungen:
**DE-A- 4 031 398       US-A- 5 099 182**
**US-A- 5 206 567       US-A- 5 650 699**

EP 1 076 408 B1

**Beschreibung**

Die vorliegende Erfindung betrifft ein Verfahren zum Starten eines elektronischen kommutierten Gleichstrommotors, der einen Stator mit mindestens einer und insbesondere drei Wicklungen und einen mit Permanentmagneten versehenen Rotor aufweist, wobei in der Startphase die Wicklung mit Startpulsen vorgebbarer Spannung und vorgebbarer Frequenz erregt wird und wobei die rückinduzierte Spannung gemessen wird (siehe US 5 206 567).

Derartige sogenannte bürstenlosen ("brushless") Gleichstrom ("DC")-Motoren gewinnen parallel mit der Entwicklung billiger und zuverlässiger Leistungshalbleiterelemente an Bedeutung. Bei diesen Motoren erfolgt die Kommutierung der Spannung nicht wie bislang mittels Bürstenkontakten sondern über das gezielte Schalten von Leistungshalbleitern. Damit der Mikroprozessor die Schaltvorgänge exakt koordinieren kann, braucht er die Information über die aktuelle Ausrichtung des Rotors. Bekanntermaßen wird zu diesem Zweck die Lage der im Rotor befindlichen Magnete entweder mittels Hall-Sensoren oder über die von den Magneten erzeugte rückinduzierte Spannung in den Statorwicklungen gemessen, wobei durch die Messung dieser "back-EMF" (BEMF) die Kosten gegenüber der Verwendung der Hall-Sensoren verringert werden können.

Problematisch bei den Motoren, die mit Messung der BEMF arbeiten ist, daß die Messung bei geringen Geschwindigkeiten und vor allem beim Anlauf des Motors wegen der sehr kleinen rückinduzierten Signale versagt. So sind Startverfahren bekannt, bei denen die Wicklungen in der Anlaufphase solange im Synchronbetrieb entlang der U/f-Kennlinie "blind" angesteuert werden, bis die BEMF meßbar wird. Dann wird auf die sensorlose Regelung anhand der BEMF umgeschaltet. Problematisch an diesem Verfahren ist, daß es in starkem Maße vom jeweiligen Motortyp abhängig ist.

Es sind weiterhin Verfahren bekannt, bei denen die erregenden Ströme derart kontrolliert werden, so daß schon bei kleinen Bewegungen des Rotors eine Messung der sehr geringen BEMF in den stromlosen Phasen möglich wird. Um mit diesen Verfahren einen zuverlässigen Start des Motors zu gewährleisten bedarf es einer vergleichsweise aufwendigen Meß- und Regelelektronik.

Aufgabe der vorliegenden Erfindung ist es daher, ein Verfahren zum Starten von brushless DC-Motoren zu schaffen, das den Einsatz von Hall-Sensoren unnötig macht und mit dem sich bei geringem technischen Aufwand verschiedene Motortypen zuverlässig starten lassen.

Diese Aufgabe wird mit einem Verfahren nach Anspruch 1 gelöst.

Ein Kerngedanke der Erfindung ist, daß die Wicklungen des Motors mit Startpulsen bestromt werden, die eine Drehung des Rotors hervorrufen müssen, solange keine Blockade des Rotors vorliegt. Die Startpulse werden dazu in ihrer Spannung so dimensioniert, daß sie den Rotor auch bei Höchstbelastung in Bewegung versetzen würden. Ein solcher Startpuls erzeugt dann mit Sicherheit eine Drehung und die Drehung eine meßbare rückinduzierte Spannung in einer Wicklung. Diese BEMF nutzt dann ein Mikroprozessor als Regelgröße für die Regelung der Bestromung der einzelnen Wicklungen. Sobald die Regelung mit dem oder den Startpulsen einsetzt, können Frequenz und/oder Spannung der Pulse auf ein Niveau verändert werden, mit dem der beabsichtigte Normalbetrieb erfolgt. Nun erfolgt die Aktivierung des normalen sensorlosen Betriebes. Dabei zeichnet sich der Normalbetrieb insbesondere dadurch aus, daß jeder Puls in Abhängigkeit der in den Wicklungen erzeugten rückinduzierten und gemessenen Spannung verändert wird.

So wird erfindungsgemäß der Motor in der Startphase mit Startpulsen von überhöhter Spannung versorgt, wobei vorteilhafterweise die Stromaufnahme beobachtet wird, um einen Defekt durch Überhitzung zu vermeiden. Wird trotz der überhöhten Startpulse keine BEMF gemessen, so kann deren Spannung bis zu einer maximal zulässigen Spannung erhöht werden, bevor entschieden wird, daß eine Blockade vorliegt und die Versorgung abgeschaltet wird. Sollte die Stromaufnahme des Motors in der Startphase einen festgelegten Maximalwert übersteigen, so ist es vorteilhaft, die Spannung der Startpulse zu verringern. Sobald eine BEMF meßbar ist werden die Frequenz und/oder die Spannung der Startpulse nach und nach an die für den Normalbetrieb nötige Frequenz und Spannung angepaßt.

Das erfindungsgemäße Verfahren zeichnet sich durch eine hohe Zuverlässigkeit in der Startphase aus. Es läßt sich mit den ohnehin in der Regelelektronik des Motors vorhandenen Komponenten bewerkstelligen und trägt somit zu einer Kostenreduzierung bei der Herstellung des Motors bei. Ein besonderer Vorteil ist, daß es sich flexibel bei vielen verschiedenen Motortypen einsetzen läßt.

In einer vorteilhaften Variante des erfindungsgemäßen Verfahrens haben die Startpulse von vornherein die maximal mögliche Spannung, mit welcher der Motor auch unter Höchstlast auf alle Fälle eine Rotation vollführt. Das hat den Vorteil, daß beim Nichtvorhandensein einer meßbaren BEMF sofort auf eine Betriebsstörung des Motors, beispielsweise eine Blockade geschlossen werden kann und die notwendigen Schritte unternommen werden können. Vorteilhafterweise ist die Frequenz der Startpulse dabei geringer, als es unter normalen Umständen diesem Modus entspräche. Wegen der hohen Zuverlässigkeit dieses Startverfahrens wird der damit verbundene ruckartige und laute Startbetrieb billigend in Kauf genommen.

Da die Lage des Rotors im Stillstand unbestimmt ist und das Startverfahren insbesondere bei Motoren mit nur ein oder zwei Wicklungen zu einem Umlauf mit falscher Drehrichtung führen kann, ist es vorteilhaft den Rotor mit einem ersten Startpuls zu positionieren und nachfolgend die Wicklung(en) mit Startpulsen entsprechend der beabsichtigten Laufrichtung zu beaufschlagen. Um die Gefahr des Rückwärtsanlaufens zu minimieren ist es von Vorteil, wenn der Stator mindestens zwei und insbesondere drei Wicklungen aufweist.

Um eine möglichst exakte und rauschfreie Messung der BEMF bewerkstelligen zu können, wird diese rückinduzierte Spannung im stromlosen Intervall zwischen zwei Startpulsen gemessen. Dazu wird die Messung erst nach dem Abschalten der Spannung gestartet. Um möglichst umfangreiche Informationen über die Bewegung des Rotors zu erhalten ist es von Vorteil, die rückinduzierte Spannung mindestens zweimal, insbesondere einmal vor und einmal nach der Hälfte des stromlosen Intervalls, also einmal vor und einmal nach dem erwarteten Nulldurchgang zu messen. Bei entsprechender Dimensionierung der Meßintervalle ist es möglich, Fehlerkennungen von Falschverläufen auszuschließen. Eine hohe Zuverlässigkeit des Verfahrens wird dadurch gesichert.

Besonders vorteilhaft lassen sich mit dem erfindungsgemäßen Verfahren bürstenlose Gleichstrommotoren starten, die zum Antrieb von Kreiselpumpen, insbesondere mit Spalttopf, dienen und die insbesondere in Heiz- oder Kühlkreisläufen von Wohnungen oder Kraftfahrzeugen eingesetzt werden.

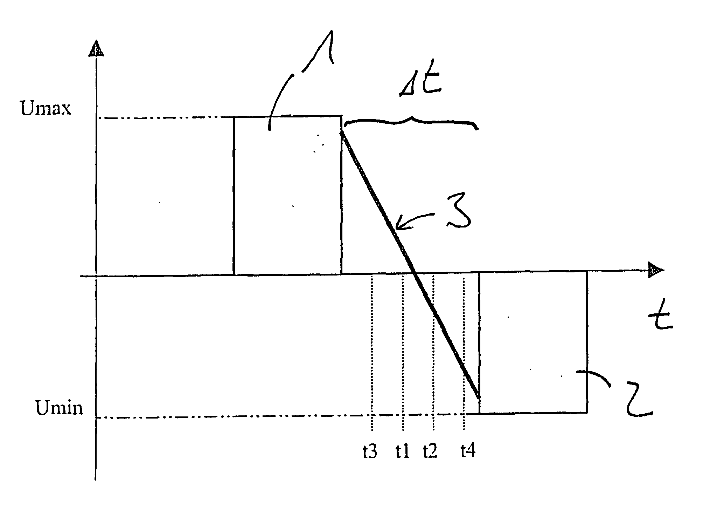

Eine besondere Ausführungsform des erfindungsgemäßen Verfahrens wird im folgenden anhand der Zeichnung näher erklärt.

Bei der Beschreibung wird die Regelung derartiger elektronisch kommutierter Gleichstrommotoren als bekannt vorausgesetzt. Diese Motoren haben beispielsweise einen achtpoligen Permanentmagnetrotor, dessen drei Wicklungen in Dreieckschaltung verschaltet sind. Die Kommutierung erfolgt mittels eines Controllers in der Form eines Mikroprozessors, der in diesem Falle sechs Leistungstransistoren ansteuert und dadurch die Wicklungen der Reihe nach bestromt. Die Drehung des Rotors induziert in den Wicklungen elektromotorische Gegenkräfte (BEMF), die an den Phasen gemessen werden können und die die Stellung des Rotors kennzeichnen.

In der Zeichnung ist dargestellt, wie in der Startphase eine Wicklung mit zwei zeitlich beabstandeten Startpulsen 1 und 2 bestromt wird, die eine Spannung $U_{max}$ bzw. $U_{min}$ aufweisen, um eine Drehung des Rotors zu verursachen. Die Spannungspulse haben in diesem Beispiel die Form eines Rechteckes. Nach dem Ende des positiven Pulses 1 wird in dem Zeitintervall $\Delta t$ die rückinduzierte Spannung 3 (BEMF) gemessen, deren Verlauf idealisiert in der Zeichnung dargestellt ist. In diesem Fall wird die BEMF zu zwei Zeitpunkten t1 und t3 vor und zu zwei Zeitpunkten t2 und t4 nach dem Nulldurchgang, der etwa zur Hälfte des Zeitintervalls $\Delta t$ stattfindet gemessen.

Bei einem störungsfreien Anlauf des Motors genügen die an den Punkten gemessenen Spannungen den folgenden Regeln.

$$U(t1) > (U_{max} - U_{min})/2$$

$$U(t2) < (U_{max} - U_{min})/2$$

$$U(t3) > U(t1)$$

$$U(t4) < U(t2)$$

Für den ansteigenden Ast der BEMF wären die Vergleiche umzukehren.

**Patentansprüche**

1. Verfahren zum Starten eines elektronischen kommutierten Gleichstrommotors, der einen Stator mit mindestens einer Wicklung und einen mit Permanentmagneten versehenen Rotor aufweist, wobei in der Startphase die Wicklung mit Startpulsen vorgebbarer Spannung und vorgebbarer Frequenz erregt wird und wobei die rückinduzierte Spannung gemessen wird,
   **dadurch gekennzeichnet,**

   - **daß** die Startpulse eine für den Normalbetrieb erhöhte Spannung aufweisen,
   - **daß** die Spannung der Startpulse erhöht oder die Spannungsversorgung abgeschaltet wird, wenn keine rückinduzierte Spannung meßbar ist,
   - **daß** die Frequenz und/oder die Spannung der Startpulse nach und nach an die für den Normalbetrieb nötige Frequenz und Spannung angepaßt werden, wenn eine rückinduzierte Spannung meßbar ist.

2. Verfahren nach Anspruch 1,
   **dadurch gekennzeichnet, daß** die Startpulse die maximale Spannung aufweisen, mit der im Normalbetrieb unter Höchstlast eine Drehung des Motors erreicht wird.

3. Verfahren nach Anspruch 2,
   **dadurch gekennzeichnet, daß** die Startpulse eine Frequenz aufweisen, mit der im Normalbetrieb unter Höchstlast eine Drehung des Motors erreicht wird.

4. Verfahren nach einem der vorherigen Ansprüche,
   **dadurch gekennzeichnet, daß** die rückinduzierte Spannung im stromlosen Intervall gemessen wird, in dem keine Spannung an den Wicklungen anliegt.

**5.** Verfahren nach einem der vorherigen Ansprüche, **dadurch gekennzeichnet, daß** die Spannung der Startpulse verringert wird, wenn die Stromaufnahme des Motors einen Maximalwert übersteigt.

**6.** Verfahren nach einem der vorherigen Ansprüche, **dadurch gekennzeichnet, daß** die Frequenz der Startpulse erhöht wird, wenn die Stromaufnahme des Motors einen Maximalwert übersteigt.

**7.** Verfahren nach einem der vorherigen Ansprüche, **dadurch gekennzeichnet, daß** im Normalbetrieb jeder Puls in Abhängigkeit der in den Wicklungen erzeugten rückinduzierten Spannung verändert wird.

**8.** Verfahren nach einem der vorherigen Ansprüche, **dadurch gekennzeichnet, daß** im stromlosen Intervall zwischen zwei Startpulsen die rückinduzierte Spannung mindestens zweimal, insbesondere einmal vor und einmal nach der Hälfte des stromlosen Intervalls, gemessen wird.

**9.** Verfahren nach einem der vorherigen Ansprüche, **dadurch gekennzeichnet, daß** der Stator drei Wicklungen aufweist.

**10.** Verfahren nach einem der vorherigen Ansprüche, **dadurch gekennzeichnet, daß** ein erster Startpuls den Rotor positioniert, bevor die Wicklung(en) nachfolgend mit Startpulsen entsprechend der beabsichtigten Laufrichtung beaufschlagt werden.

**11.** Bürstenloser Gleichstrommotor zum Antrieb einer Kreiselpumpe, der einen permanentmagnetischen Rotor und einen Stator mit insbesondere drei Wicklungen aufweist und der mit dem Verfahren nach den vorherigen Ansprüchen gestartet wird.

**Claims**

**1.** Method for starting an electronically commutated DC motor which has a stator with at least one winding and a rotor provided with permanent magnets, wherein, in the starting phase, the winding is excited with pulses of predeterminable voltage and predeterminable frequency and wherein the back-EMF is measured, **characterised in that**

- the starting pulses have a voltage raised above that for normal operation,
- the voltage of the starting pulses is raised or the voltage supply is switched off if no back-EMF is measurable,
- the frequency and/or the voltage of the starting pulses are gradually adjusted to the frequency and voltage necessary for normal operation if a back-EMF is measurable.

**2.** Method according to claim 1, **characterised in that** the starting pulses have the maximum voltage with which a rotation of the motor is achieved under maximum load in normal operation.

**3.** Method according to claim 2, **characterised in that** the starting pulses have a frequency with which a rotation of the motor is achieved under maximum load in normal operation.

**4.** Method according to one of the preceding claims, **characterised in that** the back-EMF is measured during the zero-current interval when no voltage is applied to the windings.

**5.** Method according to one of the preceding claims, **characterised in that** the voltage of the starting pulses is reduced if the current drawn by the motor exceeds a maximum value.

**6.** Method according to one of the preceding claims, **characterised in that** the frequency of the starting pulses is increased if the current drawn by the motor exceeds a maximum value.

**7.** Method according to one of the preceding claims, **characterised in that**, during normal operation, each pulse is altered depending on the back-EMF induced in the windings.

**8.** Method according to one of the preceding claims, **characterised in that**, in the zero-current interval between two starting pulses, the back-EMF is measured at least twice, and particularly once before and once after the half-way point of the zero-current interval.

**9.** Method according to one of the preceding claims, **characterised in that** the stator has three windings.

**10.** Method according to one of the preceding claims, **characterised in that** a first starting pulse positions the rotor before the winding(s) is/are subsequently fed with starting pulses depending on the intended running direction.

**11.** Brushless DC motor for driving a centrifugal pump, which has a permanent magnetic rotor and a stator with, in particular, three windings, and which is started using the method according to the preceding claims.

**Revendications**

**1.** Procédé de démarrage d'un moteur à courant continu commuté électroniquement, qui présente un stator avec au moins une bobine et un rotor muni d'aimants permanents, la bobine étant excitée dans la phase de démarrage par des impulsions de démarrage de tension pouvant être prédéfinie et de fréquence pouvant être prédéfinie et la tension rétro-induite étant mesurée,
**caractérisé par le fait**
**que** les impulsions de démarrage présentent une tension accrue pour le régime normal,
**que** la tension des impulsions de démarrage est réduite ou l'alimentation en tension est coupée quand une tension rétro-induite ne peut pas être mesurée,
**que** la fréquence et/ou la tension sont adaptées peu à peu à la fréquence et à la tension nécessaires pour le régime normal quand une tension rétro-induite peut être mesurée.

2. Procédé selon la revendication 1,
**caractérisé par le fait que** les impulsions de démarrage présentent la tension maximale avec laquelle une rotation du moteur est obtenue sous la charge la plus élevée en régime normal.

3. Procédé selon la revendication 2,
**caractérisé par le fait que** les impulsions de démarrage présentent une fréquence avec laquelle une rotation du moteur est obtenue sous la charge la plus élevée en régime normal.

4. Procédé selon l'une des revendications précédentes,
**caractérisé par le fait que** la tension rétro-induite est mesurée dans l'intervalle sans courant dans lequel aucune tension n'est présente aux bobines.

5. Procédé selon l'une des revendications précédentes,
**caractérisé par le fait que** la tension des impulsions de démarrage est réduite quand la consommation de courant du moteur dépasse une valeur maximale.

6. Procédé selon l'une des revendications précédentes,
**caractérisé par le fait que** la fréquence des impulsions de démarrage est augmentée quand la consommation de courant du moteur dépasse une valeur maximale.

7. Procédé selon l'une des revendications précédentes,
**caractérisé par le fait que**, en régime normal, chaque impulsion est modifiée en dépendance de la tension rétro-induite engendrée dans les bobines.

8. Procédé selon l'une des revendications précédentes,
**caractérisé par le fait que**, dans l'intervalle sans courant entre deux impulsions de démarrage, la tension rétro-induite est mesurée au moins deux fois, en particulier une fois avant et une fois après la moitié de l'intervalle sans courant.

9. Procédé selon l'une des revendications précédentes,
**caractérisé par le fait que** le stator présente trois bobines.

10. Procédé selon l'une des revendications précédentes,
**caractérisé par le fait qu'**une première impulsion de démarrage positionne le rotor avant que la(les) bobine(s) ne soi(en)t ensuite soumises à l'action d'impulsions de démarrage en correspondance avec la direction de rotation projetée.

11. Moteur à courant continu sans balais pour l'entraînement d'une pompe centrifuge, qui présente un rotor à aimantation permanente et un stator à en particulier trois bobines et qui est démarré par le procédé selon l'une des revendications précédentes.